(19) Europäisches Patentamt
European Patent Office
Office européen des brevets

(11) Veröffentlichungsnummer : **0 188 683**
**B1**

(12) # EUROPÄISCHE PATENTSCHRIFT

(45) Veröffentlichungstag der Patentschrift : **22.02.89**

(51) Int. Cl.⁴ : **C 08 L 69/00**, C 08 K 5/00

(21) Anmeldenummer : **85114309.9**

(22) Anmeldetag : **11.11.85**

(54) **Thermoplastische Formmassen mit flammwidrigen Eigenschaften.**

(30) Priorität : **08.12.84 DE 3444868**

(43) Veröffentlichungstag der Anmeldung : **30.07.86 Patentblatt 86/31**

(45) Bekanntmachung des Hinweises auf die Patenterteilung : **22.02.89 Patentblatt 89/08**

(84) Benannte Vertragsstaaten : **DE FR GB IT NL**

(56) Entgegenhaltungen :
**EP–A– 0 103 230**
**EP–A– 0 174 493**
**DE–A– 2 162 437**
**FR–A– 2 204 649**
**FR–A– 2 239 512**
**US–A– 3 773 715**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Tödtemann, Gert**
**Neuenweg 5**
**D-5632 Wermelskirchen (DE)**
Erfinder : **Reinking, Klaus, Dr.**
**Robert-Stolz-Strasse 16b**
**D-5632 Wermelskirchen (DE)**
Erfinder : **Koch, Otto, Dr.**
**Morgengraben 12**
**D-5000 Köln 80 (DE)**
Erfinder : **Kress, Hans-Jürgen, Dr.**
**Scheiblerstrasse 111**
**D-4150 Krefeld (DE)**
Erfinder : **Lindner, Christian, Dr.**
**Riehlerstrasse 200**
**D-5000 Köln 60 (DE)**
Erfinder : **Müller, Friedemann, Dr.**
**Am Steinacker 5**
**D-4040 Neuss 21 (DE)**
Erfinder : **Peters, Horst, Dr.**
**Winterberg 25**
**D-5090 Leverkusen 3 (DE)**
Erfinder : **Buekers, Josef**
**Kneinstrasse 58a**
**D-4150 Krefeld (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 188 683 B1

**Beschreibung**

Legierungen aus 50-95 Gew.-% aromatischer Polycarbonate und 95 bis 5 Gew.-% Styrol-Maleinsäureanhydrid-Copolymeren mit 5-30 Gew.-% einpolymerisiertem Maleinsäureanhydrid sind thermoplastische Formmassen, die die Polycarbonate, denen sie in den meisten technologischen Eigenschaften ähneln, vor allem hinsichtlich Beständigkeit gegenüber heißem Wasser sowie hinsichtlich Fließfähigkeit der Schmelzen bei thermoplastischer Verarbeitung deutlich übertreffen (DE-OS 22 52 974).

Ein wesentlicher Nachteil der Legierungen aus aromatischen Polycarbonaten und Styrol-Maleinsäureanhydrid-Copolymereren ist jedoch, daß sie die gebräuchlichen Brandprüfungen, z. B. die Brandprüfungen gemäß UL, Subj. 94, nicht bestehen.

Dieser Nachteil kann zwar durch Einarbeiten geeigneter Brandschutzsysteme, z. B. von aromatischen Bromverbindungen und von Antimontrioxid, oder durch Verwendung bromhaltiger Polycarbonate in Kombination mit Antimontrioxid beseitigt werden (US-PS 4 151 218), man handelt sich jedoch durch die Verwendung von Metalloxidverbindungen als Flammschutzsynergisten Nachteile ein, beispielsweise Schwierigkeiten bei der Verarbeitbarkeit, insbesondere bei hohen Temperaturen. Formkörper daraus haben manchmal eine mangelhafte Oberfläche, beispielsweise Mikrorisse oder Schlieren.

Die EP-A-103 230 offenbart Formmassen ggf. halogenhaltiger Tetramethylbisphenol-A-Polycarbonate mit Styrol/Maleinsäureanhydrid Copolymerisaten, Polyphosphorverbindungen und Polytetrafluorethylen, deren Brandverhalten noch verbesserungsbedürftig ist.

Ziel der vorliegenden Erfindung ist daher die Entwicklung von flammwidrigen Polycarbonatlegierungen der oben genannten Art, die diese Nachteile nicht haben.

Gegenstand der vorliegenden Erfindung sind daher thermoplastische Formmassen, bestehend aus

a) 50-90 Gew.-Teilen eines halogenhaltigen Copolycarbonats aus einem zweiwertigen Phenol und einem zweiwertigen halogenierten Phenol der Formel (II)

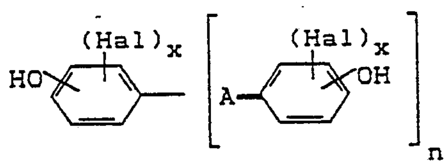

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$—, Hal, Chlor oder Brom, x 0, 1 oder 2 und n 1 oder 0 sind,

wobei das Copolycarbonat 3-20 Gew.-% Halogen in Form von einkondensierten, halogenierten, zweiwertigen Phenolen enthält,

b) 10-50 Gew.-Teile eines statistisch aufgebauten Copolymerisats aus

b1) 95-70 Gew.-% vorzugsweise 90-75 Gew.-%, Styrol, α-Methylstyrol, kernalkyliertem Styrol oder Mischungen der genannten Vinylaromaten und

b2) 5-30 Gew.-% vorzugsweise 10-25 Gew.-%, Maleinsäureanhydrid,

c) 3-20 Gew.-Teile, vorzugsweise 5-15 Gew.-Teile, bezogen auf 100 Teile Gesamtgewicht aus a) + b), einer Phosphorverbindung der Formel (I)

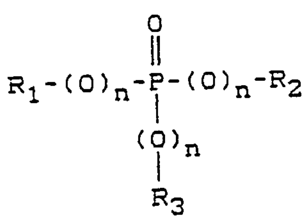

(I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl sind und n für 0 oder 1 steht und

d) 0,05-5 Gew.-Teile, insbesondere 0,1-1 Gew.-Teile, bezogen wiederum auf 100 Teile Gesamtgewicht aus a) + b) eines Tetrafluorethylenpolymerisats mit einem Fluorgehalt von 65-76 Gew.-%.

Die erfindungsgemäßen, thermoplastischen Formmassen können zusätzlich als Komponente e) für Polycarbonate oder für Styrol-Maleinsäureanhydrid-Copolymere geeignete organische Halogenverbindungen als Flammschutzmittel in Mengen bis zu 12 Gew.-Teilen, bezogen wiederum auf 100 Teile Gesamtgewicht aus a) + b), enthalten, sowie gegebenenfalls weitere bekannte Zusätze wie Stabilisatoren, Pigmente, Fließmittel, Entformungsmittel und/oder Antistatika.

Die Diphenole der Formel (II) sind entweder literaturbekannt oder nach literaturbekannten Verfahren herstellbar.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis (3,5-dichlor-4-hydroxy-phenyl)-propan, 2,2-Bis-(3,5-dibrom-4-hydroxyphenyl)-propan und 1,1-Bis-(4-hydroxyphenyl)-cyclohexan.

Die Herstellung der erfindungsgemäß geeigneten Polycarbonate gemäß Komponente a) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente a) haben im allgemeinen mittlere Gewichtsmittelmolekulargewichte ($\bar{M}w$, gemessen beispielsweise durch Ultrazentrifugation oder Streulichtmessung) von 10 000-200 000, vorzugsweise von 20 000-80 000.

Die erfindungsgemäß geeigneten Polycarbonate gemäß Komponente a) können in bekannter Weise verzweigt sein, und zwar vorzugsweise durch den Einbau von 0,05-2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Copolycarbonate sind Copolycarbonate auf Basis von Bisphenol A mit bis zu 15 Gew.-%, bezogen auf die Summe der Diphenole, an Bis-(3,5-dibrom-4-hydroxyphenyl)-propan.

Die erfindungsgemäß geeigneten Copolymerisate gemäß Komponente b) sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Als kernalkylierte Styrole sind beispielsweise p-Methylstyrol, Vinyltoluol, 2,4-Dimethylstyrol und deren Mischungen geeignet.

Die Molekulargewichte der erfindungsgemäß geeigneten statistisch aufgebauten Styrol-Maleinsäureanhydrid-Copolymeren gemäß Komponente b) können über einen weiten Bereich variieren. Bevorzugt ist für diese Produkte eine Grenzviskositätszahl [$\eta$] von 0,4-0,9 (gemessen in Dimethylformamid bei 25 °C ; siehe hierzu Hoffmann, Krömer, Kuhn, Polymeranalytik I, Stuttgart 1977, Seiten 316 ff.).

Die erfindungsgemäß einzusetzenden Phosphorverbindungen gemäß Komponente c) sind generell bekannt (siehe beispielsweise Ullmann, Enzyklopädie der technischen Chemie, Band 18, S. 301 ff, 1979).

Gegebenenfalls halogenierte $C_1$-$C_8$-Alkylreste gemäß $R_1$, $R_2$ oder $R_3$ der Formel (I) sind 2-Chlorethyl, 2,3-Dibrompropyl, 2,3-Dichlorpropyl ; gegebenenfalls halogenierte $C_6$-$C_{20}$-Arylreste gemäß $R_1$, $R_2$ oder $R_3$ der Formel (I) sind Chlorphenyl, Bromphenyl, Pentachlorphenyl, Pentabromphenyl, Phenyl, Kresyl, Isopropylphenyl und Naphthyl.

Erfindungsgemäß geeignete Phosphorverbindungen gemäß Formel (I) sind Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri(isopropylphenyl) phosphat, halogensubstituierte Arylphosphate, Methanphosphonsäuredimethylester, Methanphosphonsäurediphenylester, Phenylphosphonsäurediethylester, Triphenylphosphinoxid und Trikresylphosphinoxid.

Die erfindungsgemäß geeigneten Tetrafluorethylenpolymerisate gemäß Komponente d) sind Polymere mit Fluorgehalten von 65-76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomere. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7-71 $kg/cm^2$ und bei Temperaturen von 0-200 °C, vorzugsweise bei Temperaturen von 20-100 °C (nähere Einzelheiten siehe beispielsweise US-Patent 2 393 967). Die Dichte dieser Materialien liegt vorzugsweise im Bereich von 2,0 bis 2,3 $g/cm^3$, die Teilchengrößen liegen im Bereich von 100 bis 1 000 $\mu m$.

Als Flammschutzmittel geeignete organische Halogenverbindungen gemäß Komponente e) sind im Prinzip alle, die bei der Herstellung und Verarbeitung der erfindungsgemäßen Formmassen nicht flüchtig und thermisch stabil sind, d. h. dabei kein Halogen abspalten, und somit im Brandfall ihre Flammschutzwirkung ausüben können. Insbesondere sind geeignet Decabromdiphenylether, Octabromdiphenyl, Octabromdiphenylether und Tribromtetrachlortoluol, ferner oligomere Bromverbindungen, wie beispielsweise Oligocarbonate auf Basis Tetrabrombisphenol-A und schließlich auch polymere Bromverbindungen, wie beispielsweise hochmolekulare kernbromierte Polyphenylenoxide.

Die erfindungsgemäßen Formmassen bestehend aus den Komponenten a), b), c), d), gegebenenfalls e) und gegebenenfalls weitere bekannte Zusätze wie Stabilisatoren, Pigmente, Fließmittel, Entformungsmittel und/oder Antistatika werden hergestellt, indem man die jeweiligen Bestandteile in bekannter Weise vermischt und bei Temperaturen von 200 °C-330 °C in üblichen Aggregaten, wie Innenknetern, Extrudern oder Doppelwellenschnecken schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen bestehend aus den Komponenten a), b), c), d), gegebenenfalls Komponente e), und gegebenenfalls Stabilisatoren, Pigmente, Fließmittel, Entformungsmittel und/oder Antistatika, das dadurch gekennzeichnet ist, daß man die Komponenten a), b), c), d) gegebenenfalls die Komponente e), und gegebenenfalls Stabilisatoren, Pigmente, Fließmittel, Entformungsmittel und/oder Antistatika nach erfolgter Vermischung bei Temperaturen von 200-330 °C, in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z. B. für Haushaltsgeräte, wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

## Beispiele

Eingesetzte Legierungskomponenten

a. Ein Copolycarbonat, bestehend aus Bisphenol A und 10 Gew.-% Tetrabrombisphenol A, bezogen auf Gewicht Copolycarbonat, mit einer rel. Lösungsviskosität von 1,284, gemessen in $CH_2Cl_2$ bei 25 °C und einer Konzentration von 0,5 g/l, Gehalt an Brom: 5 Gew.-%.

b. Herstellung der Copolymerharze

In einem ummantelten Gefäß, das mit Innenthermometer, Rührer, Ein- und Auslaß versehen ist, werden 750 Teile eines Gemisches mit einer Zusammensetzung gemäß Tab. 1 vorgelegt und auf 130 °C erwärmt. Dann wird ein Monomerstrom von 1 100 Teilen derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Teile pro Stunde tert.-Butylperpivalat (75 %ig in Dibutylphthalat) zugefügt. Nach ca. 2 h hat sich ein konstanter Umsatz von ca. 40 % eingestellt. Die Polymerlösung wird mit 0,1 Gew.-% 2,5-Di-t-butyl-p-kresol versetzt und anschließend auf einem Ausdampfextruder von Monomeren und flüchtigen Bestandteilen befreit. Die jeweiligen Grenzviskositätszahlen, bestimmt durch Messung in Dimethylformamid bei 25 °C sind in Tabelle 1 aufgeführt.

Tabelle 1 : Zusammensetzung der Einsatzmonomeren und der Copolymerisate b)

| | Einsatzmonomere Gew.-% | | Copolymerisat Gew.-% | | Grenzviskositätszahlen |
|---|---|---|---|---|---|
| | Styrol | Maleinsäureanhydrid | Styrol | Maleinsäureanhydrid | des Copolymerisats [η] |
| b) 1) | 95,5 | 4,4 | 89 | 11 | 0,499 |
| b) 2) | 93,2 | 6,8 | 83 | 17 | 0,518 |
| b) 3) | 92,0 | 8,0 | 80 | 20 | 0,503 |

c. Diphenylkresylphosphat

d. Polytetrafluorethylen in Pulverform mit einer Teilchengröße von 500-650 µm (Hostaflon TF 2026 der Firma Hoechst)

Die Compoundierung der Komponente a), b)1) bis b)3), c) und d) erfolgte auf einem Doppelwellenextruder (ZSK 32 der Firma Wener & Pfleiderer) bei Temperaturen zwischen 230 und 250 °C.

Die Herstellung der Formkörper erfolgte auf einer Spritzgießmaschine bei 250 °C.

Das Brandverhalten von Proben wurde nach UL-Subj. 94 V in Prüfkörperdicken von 1,6 und 3,2 mm gemessen. Der UL 94 V-Test wird wie folgt durchgeführt:

Substanzproben werden zu Stäben der Abmessungen 127 × 12,7 × 1,6 mm bzw. 127 × 12,7 × 3,2 mm geformt. Die Stäbe werden vertikal so montiert, daß die Unterseite des Probekörpers sich 305 mm

über einen Streifen Verbandsstoff befindet. Jeder Probestab wird einzeln mittels zweier aufeinanderfolgender Zündvorgänge von 10 sec. Dauer entzündet. Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von 3,73 × $10^4$ kJ/$m^3$ (1,000 BTU per cubic foot) benutzt.

Die UL 94 V-O-Klassifizierung umfaßt die nachstehend beschriebenen Eigenschaften von Materialien, die gemäß UL 94-Vorschrift geprüft wurden. Die Materialien in dieser Klasse enthalten keine Proben, die länger als 10 sec nach jeder Einwirkung der Testflamme brennen ; sie zeigen keine Gesamtflammzeit von mehr als 50 sec bei der zweimaligen Flammeinwirkung auf jeden Probensatz ; sie enthalten keine Proben, die vollständig bis hinauf zu der am oberen Ende der Probe befestigten Halteklammer abbrennen ; sie weisen keine Proben auf, die die unterhalb der Probe angeordnete Watte durch brennende Tropfen oder Teilchen entzünden ; sie enthalten auch keine Proben, die länger als 30 sec. nach Entfernen der Testflamme glimmen.

Andere UL 94-Klassifizierungen bezeichnen Proben, die eine längere Nachbrennzeit aufweisen (Klassifizierung V-1) oder die außerdem brennende Tropfen oder Teilchen abgeben, die die unterhalb der Probe angeordnete Watte entzünden (Klassifizierung V-2). Die Klassifizierung « n. b. » heißt « nicht bestanden » und bedeutet, daß die Proben eine Nachbrennzeit von ≥ 30 sec aufweisen.

Aus der folgenden Tabelle können die genauen Zusammensetzungen der geprüften Formmassen sowie die erhaltenen UL 94-Klassifizierungen entnommen werden :

| | Gew.-% | | | | | | | |
|---|---|---|---|---|---|---|---|---|
| | a) | b)1) | b)2) | b)3) | c) | d) | UL 94 V 3,2 mm | UL 94 V 1,6 mm |
| Vergleichsversuche | | | | | | | | |
| V1 | 70 | 30 | | | | | n. b. | n. b. |
| V2 | 70 | | 30 | | | | n. b. | n. b. |
| V3 | 70 | | | 30 | | | n. b. | n. b. |
| Versuche gemäß vorliegender Erfindung | | | | | | | | |
| E1 | 70 | 30 | | | 5 | 0,2 | VO | V1 |
| E2 | 70 | | 30 | | 5 | 0,2 | VO | VO |
| E3 | 70 | | | 30 | 3 | 0,2 | VO | V1 |

## Patentansprüche

1. Thermoplastische Formmassen bestehend aus

a) 50-90 Gew.-Teilen eines halogenhaltigen Copolycarbonats aus einem zweiwertigen Phenol und einem zweiwertigen halogenierten Phenol der Formel (II)

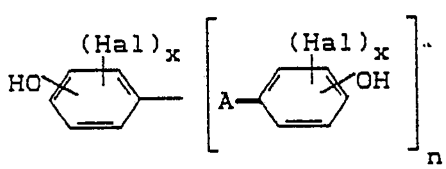

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$—, Hal, Chlor oder Brom, x 0, 1 oder 2 und n 1 oder 0 sind,
wobei das Copolycarbonat 3-20 Gew.-% Halogen in Form von einkondensierten, halogenierten, zweiwertigen Phenolen enthält,

b) 10-50 Gew.-Teile eines statistisch aufgebauten Copolymerisats aus

b1) 95-70 Gew.-% Styrol, α-Methylstyrol, kernalkyliertem Styrol oder Mischungen der genannten Vinylaromaten und

b2) 5-30 Gew.-% Maleinsäureanhydrid,

c) 3-20 Gew.-Teile, bezogen auf 100 Teile Gesamtgewicht aus a) + b), einer Phosphorverbindung der Formel (I)

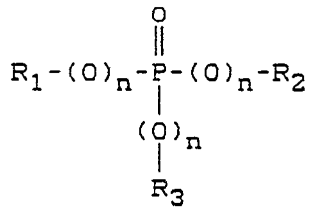

(I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl sind und n für 0 oder 1 steht und

d) 0,05-5 Gew.-Teile, bezogen wiederum auf 100 Teile Gesamtgewicht aus a) + b) eines Tetrafluorethylenpolymerisats mit einem Fluorgehalt von 65-76 Gew.-%.

2. Thermoplastische Formmassen bestehend aus den Formmassen gemäß Anspruch 1 und zusätzlich aus bis zu 12 Gew.-Teilen, bezogen wiederum auf 100 Teile Gesamtgewicht aus a) + b), als Komponente e) geeignete organische Halogenverbindungen als Flammschutzmittel.

3. Thermoplastische Formmassen bestehend aus den Formmassen gemäß Ansprüche 1 und 2 und zusätzlich aus mindestens einem Zusatz, ausgewählt aus der Gruppe der Stabilisatoren, Pigmente, Fließmittel, Entformungsmittel und Antistatika.

4. Verfahren zur Herstellung der Formmassen der Ansprüche 1 und 2, dadurch gekennzeichnet, daß man die Komponenten a), b), c), d) und gegebenenfalls e) nach erfolgter Vermischung bei Temperaturen von 200 °C bis 330 °C in gebräuchlichen Aggregaten schmelzcompoundiert oder schmelzextrudiert.

5. Verfahren zur Herstellung der Formmassen der Ansprüche 1 und 2, dadurch gekennzeichnet, daß man die Komponenten a), b), c), d) und gegebenenfalls e) in geeigneten organischen Lösungsmitteln mischt und die Lösungsgemische dann in gebräuchlichen Eindampfaggregaten eindampft.

6. Verfahren gemäß den Ansprüchen 4 und 5 zur Herstellung der Formmassen des Anspruchs 3, dadurch gekennzeichnet, daß man mindestens einen Zusatz, ausgewählt aus der Gruppe der Stabilisatoren, Pigmente, Fließmittel, Entformungsmittel und Antistatika einbezieht.

## Claims

1. Thermoplastic moulding compositions consisting of :

a) 50-90 parts by weight of a halogen-containing copolycarbonate from a dihydric phenol and a dihydric halogenated phenol of the formula (II)

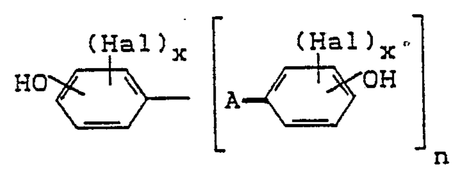

wherein A is a single bond, a $C_1$-$C_5$-alkylene, a $C_2$-$C_5$-alkylidene, a $C_5$-$C_6$-cycloalkylidene, —S— or —$SO_2$—, Hal is chlorine or bromine, x is 0, 1 or 2 and n is 1 or 0,

the copolycarbonate containing 3-20 % by weight of halogen, in the form of cocondensed, halogenated dihydric phenols,

b) 10-50 parts by weight of a halogen-free copolymer of random structure from

b1) 95-70 % by weight of styrene, α-methylstyrene, ring-alkylated styrene or mixtures of said vinyl aromatics and

b2) 5-30 % by weight of maleic anhydride,

c) 3-20 parts by weight, relative to 100 parts total weight of a) + b), of a phosphorus compound of the formula (I)

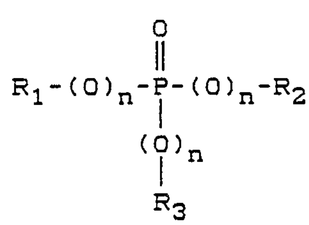

wherein $R_1$, $R_2$ and $R_3$, independently of one another, are optionally halogenated $C_1$-$C_8$-alkyl or an optionally halogenated $C_6$-$C_{20}$-aryl, and n stands for 0 or 1, and

d) 0.05-5 parts by weight, again relative to 100 parts total weight of a) + b), of a tetrafluoroethylene polymer with a flourine content of 65-76 % by weight.

2. Thermoplastic moulding compositions consisting of the moulding compositions according to Claim 1 and additionally, as component e, up to 12 parts by weight, again relative to 100 parts total weight of a) + b), of suitable organic halogen compounds as flameproofing agents.

3. Thermoplastic moulding compositions consisting of the moulding compositions according to Claims 1 and 2 and additionally contain at least one additive selected from the group comprising stabilisers, pigments, flow-control agents, mould release agents and antistats.

4. Process for preparing the moulding compositions of Claims 1 and 2, characterised in that components a), b), c), d) and if desired e) are mixed and melt-compounded or melt-extruded at temperatures of 200 °C to 330 °C in customary machines.

5. Process for preparing the moulding compositions of Claims 1 and 2, characterised in that components a), b), c), d) and if desired e) are mixed in suitable organic solvents and the solvent mixtures are then evaporated in customary evaporators.

6. Process according to Claims 4 and 5 for preparing the moulding compositions of Claim 3, characterised in that at least one additive selected from the group comprising stabilisers, pigments, flow-control agents, mould release agents and antistats is included.

## Revendications

1. Compositions thermoplastiques à mouler, consistant en

a) 50 à 90 parties en poids d'un copolycarbonate, contenant de l'halogène, obtenu à partir d'un phénol divalent et d'un phénol halogéné divalent de formule (II)

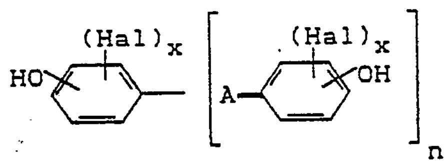

(II)

dans laquelle A représente une liaison simple, un groupe alkylène en $C_1$ à $C_5$, un groupe alkylidène en $C_2$ à $C_5$, un groupe cycloalkylidène en $C_5$ ou $C_6$, —S— ou —$SO_2$— ; Hal représente le chlore ou le brome ; x vaut 0,1 ou 2 et n vaut 1 ou 2 ;

le copolycarbonate contenant 3 à 20 % en poids d'halogène sous forme de phénols divalents, halogénés, introduits par condensation,

b) 10 à 50 parties en poids d'un copolymère de structure statistique, formé par

b1) 95 à 70 % en poids de styrène, d'α-méthylstyrène, de styrène alkylé dans le noyau ou de mélanges des vinylaromatiques cités et

b2) 5 à 30 % en poids d'anhydride de l'acide maléique,

c) 3 à 20 parties en poids, sur la base de 100 parties en poids de a) + b), d'un composé du phosphore, de formule (I)

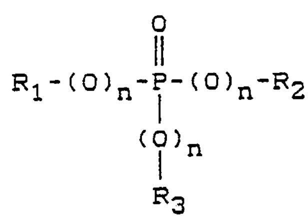

(I)

dans laquelle $R_1$, $R_2$ et $R_3$ représentent, indépendamment l'un de l'autre, un groupe alkyle en $C_1$ à $C_8$, éventuellement halogéné, ou un groupe aryle en $C_6$ à $C_{20}$, éventuellement halogéné et n vaut 0 ou 1, et

d) 0,05 à 5 parties en poids, sur la base à nouveau de 100 parties du poids total de a) + b), d'un polymère de tétrafluoréthylène, ayant une teneur en fluor de 65 à 76 % en poids.

2. Matières thermoplastiques à mouler, consistant en des matières à mouler selon la revendication 1, en outre comportant jusqu'à 12 parties en poids, sur la base à nouveau de 100 parties du poids total a) + b), comme composant e) de composés organiques halogénés convenant comme agents de protection contre la flamme.

3. Matières thermoplastiques à mouler, consistant en les matières à mouler selon les revendications 1 et 2, et comportant en outre au moins un additif, choisi parmi des stabilisants, des pigments, des agents de fluidité, des agents de démoulage et des agents anti-électricité statique.

4. Procédé pour préparer des matières à mouler selon les revendications 1 et 2, caractérisé en ce qu'on soumet les composants a), b), c), d) et éventuellement e), après obtention d'un mélange à des températures de 200 °C à 330 °C, à un malaxage au fondu ou à une extrusion au fondu, dans des appareils usuels.

5. Procédé pour préparer des matières à mouler selon les revendications 1 et 2, caractérisé en ce qu'on mélange les composants a), b), c), d) et éventuellement e) dans des solvants organiques convenables et l'on concentre ensuite par évaporation, les mélanges et solutions dans des appareils usuels de concentration par évaporation.

6. Procédé selon les revendications 4 et 5 pour préparer les matières à mouler de la revendication 3, caractérisé en ce qu'on incorpore au moins un additif, choisi parmi des stabilisants, des pigments, des agents de fluidité, des agents de démoulage et des agents anti-électricité statique.